# EUROPEAN PATENT APPLICATION

(11) **EP 4 661 202 A1**
(43) Date of publication of application: **10.12.2025**
(21) Application number: 24843581.0
(22) Date of filing: 01.07.2024
(51) Int. Cl.: H01M 50/59, H01M 50/502, H01M 50/507, H01M 50/569, H01M 50/211

(54) **BUSBAR ASSEMBLY AND BATTERY PACK INCLUDING SAME**

(30) Priority: 20.07.2023 KR 20230094532
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2024/095896
(87) International publication number: WO 2025/018870

(57) **Abstract**

A busbar assembly according to an embodiment of the present disclosure includes: a busbar that guides an electrical connection of a battery module inside a battery pack; a fire resistant silicone member in which a recessed part is formed on a lower surface; and a cover in which an opening part is formed on a lower part. The fire resistant silicone member is fitted into the inside of the cover through the opening part, and busbar is mounted in the recessed part of the fire resistant silicone member.

## Description

### [TECHNICAL FIELD]

### Cross Citation with Related Application(s)

This application claims the benefit of Korean Patent Application No. 10-2023-0094532 filed on July 20, 2023 with the Korean Intellectual Property Office, the disclosure of which is incorporated herein by reference in its entirety.

The present disclosure relates to a busbar assembly and a battery pack including the same, and more particularly, to a busbar assembly having an improved fire resistance and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle(EV), a hybrid electric vehicle(HEV), a plug-in hybrid electric vehicle(P-HEV) and the like, in an attempt to solve air pollution and the like caused by existing gasoline vehicles using fossil fuel. Therefore, a necessity for the development of the secondary battery is growing.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery generally uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are arranged with a separator interposed between them, and a battery case which hermetically houses the electrode assembly together with an electrolyte.

Depending on the shape of the exterior material, generally, a lithium secondary battery may be classified into a can type secondary battery where the electrode assembly is incorporated into a metal can and a pouch type battery where the electrode assembly is incorporated into a pouch of an aluminum laminate sheet.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BDU (battery disconnect unit), a BMS (battery management system), and a cooling system to form a battery pack.

In the battery pack configured to gather a plurality of battery modules, heat generated from multiple battery cells can be added up in a narrow space, so that the temperature can rise more quickly and excessively. In other words, battery modules in which multiple battery cells are stacked and a battery pack equipped with these battery modules can obtain high output, but when the heat dissipation of battery cells is not properly performed or thermal runaway phenomenon occurs in a battery cell, the possibility of explosion or ignition is high.

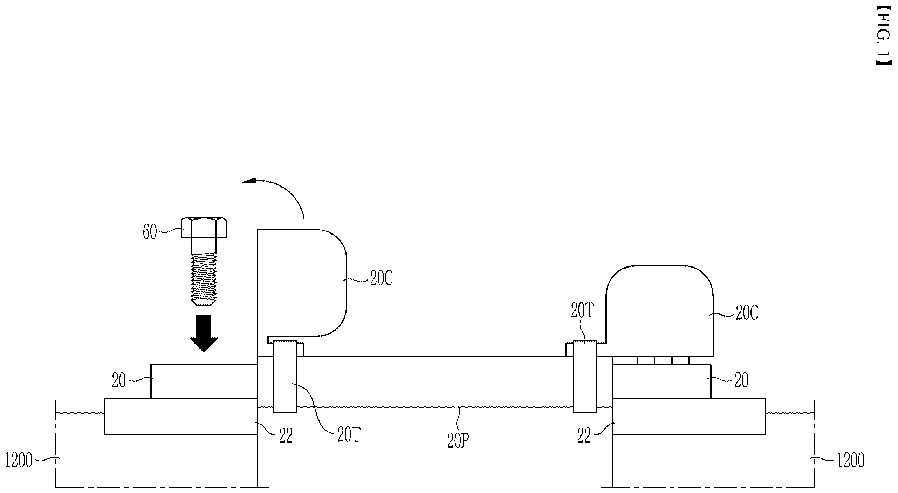

Meanwhile, a busbar connected to the battery module is provided inside the battery pack. FIG. 1 is a diagram showing a conventional busbar.

Referring to FIG. 1, a conventional busbar 20 is a bar-shaped metal member that extends along the length direction. The busbar 20 is a medium that electrically connects between terminal busbars 22 of a battery module 1200, and as an example, each of both ends of the busbar 20 can be connected to the terminal busbar 22 of the battery module 1200. For example, the busbar 20 and the terminal busbar 22 can be physically and electrically connected in such a way that a bolt member 60 penetrates through both the busbar 20 and the terminal busbar 22 and is coupled with a nut.

Such a busbar 20 is configured to be in charge of HV (High voltage) connection in the battery pack. The HV connection means a connection that serves as a power source to supply electric power, and the busbar 20 is configured to guide an electrical connection of the battery module, and generally includes a metal material having excellent electrical conductivity. As an example, the busbar 20 may include a copper (Cu) material.

The covering member 20P may wrap around the busbar 20. The covering member 20P may include a material that is electrically insulating, and as an example, it may include a silicone material or an epoxy material. Since the covering member 20P wraps around the busbar 20 through which a high current flows, it blocks the busbar 20 from coming into contact with other electrical components or conductive members other than the terminal busbar of the battery module to cause a short circuit. In addition, a cap 20C covering the portion where the busbar 20 and the terminal busbar 22 are connected may be provided, wherein the cap 20C may be fixed to the covering member 20P by a tape 20T.

In recent years, battery packs require an equipment that prevents ejection of flames to the outside of the battery pack even if a fire occurs inside the battery pack. Since the flame generated inside the battery pack has a very high temperature of about 1000 degrees Celsius, the covering material 20P covering the busbar 20 may melt so that the busbar 20 may be exposed. If the exposed busbar 20 comes into contact with other electrical components or conductive materials to cause a short circuit, the internal flame may spread further and may propagate to the outside of the battery pack. Ultimately, this may lead to an explosion of the battery pack or a vehicle equipped with the battery pack.

In addition, in the case where the cap 20C covers the portion where the busbar 20 and the terminal busbar 22 are connected, the busbar 20 portion is generally covered, but there is a risk that the terminal busbar 22 may be exposed in the lateral direction. If dust particles or the like accumulate in the gaps where the terminal busbars 2 are exposed in this way, the risk of short-circuiting with other electrical components inside the battery pack increases.

Therefore, there is a need to develop a technology for a busbar assembly that can maintain electrical insulation properties.

### [DETAILED DESCRIPTION OF THE INVENTION]

### [Technical Problem]

It is an object of the present disclosure to provide a busbar assembly that can maintain electrical insulation properties without being melted even if a flame occurs inside the battery pack, and a battery pack including the same.

However, the technical problems to be solved by embodiments of the present disclosure are not limited to the above-mentioned problems, and can be variously expanded within the scope of the technical idea included in the present disclosure.

### [Technical Solution]

According to an embodiment of the present disclosure, there is provided a busbar assembly comprising: a busbar that guides an electrical connection of a battery module inside a battery pack; a fire resistant silicone member in which a recessed part is formed on a lower surface; and a cover in which an opening part is formed on a lower part, wherein the fire resistant silicone member is fitted into the inside of the cover through the opening part, and wherein the busbar is mounted in the recessed part of the fire resistant silicone member.

The recessed part may comprise a first recessed part configured to be recessed corresponding to the shape of the busbar.

The busbar may have at least two connection regions that are portions in contact with the terminal busbar of the battery module.

The recessed part may comprise a first recessed part configured to be recessed corresponding to the shape of the busbar; and a second recessed part configured to be more recessed than the first recessed part in a portion corresponding to the connection area.

The connection region of the busbar may be connected to the terminal busbar of the battery module by a bolt connection.

A plurality of grooves may be formed on an outer surface facing the inner surface of the cover among the fire resistant silicone members.

The plurality of grooves may extend along one side surface part, the upper surface part, and the other side surface part of the fire resistant silicone member.

The fire resistant silicone member may comprise a fixed guide part that supports a part of the lower surface of the busbar.

The busbar assembly may further comprise a glass fiber tape that wraps around an outer surface of the cover.

The fire resistant silicone member may comprise a silicone material that is ceramified at high temperature.

The cover may comprise a MICA material.

According to another embodiment of the present disclosure, there is provided a battery pack comprising: at least one busbar assembly; the battery modules; a BDU (Battery Disconnect Unit) module for controlling the electrical connection of the battery modules; and a BMS (Battery Management System) module for monitoring and controlling the operation of the battery modules, wherein the at least one busbar assembly electrically connects at least one of: between the battery modules, between the battery module and the BDU module, between the battery module and the BMS module, or between the BDU module and the BMS module.

### [Advantageous Effects]

According to embodiments of the present disclosure, the busbar assembly comprises a fire resistant silicon member that is ceramified at high temperature or a flame and a cover covering the fire resistant silicon member, so that the electrical insulation properties of the busbar assembly can be maintained even if a flame occurs inside the battery pack.

In addition, the fire resistant silicon member and the cover can completely cover the portion where the busbar and the terminal busbar are connected. Thereby, there is not risk that dust particles or the like accumulate on the busbar or the terminal busbar of the battery module, thereby capable of reducing the risk of short-circuiting with other electrical components inside the battery pack.

Effects obtainable from the present disclosure are not limited to the effects mentioned above, and additional other effects not mentioned herein will be clearly understood from the description of the appended claims by those skilled in the art.

### [BRIEF DESCRIPTION OF THE DRAWINGS]

FIG. 1 is a diagram showing a conventional busbar.
FIG. 2 is a plan view showing a battery pack according to an embodiment of the present disclosure.
FIG. 3 is a perspective view showing one of the battery modules included in the battery pack of FIG. 2.
FIG. 4 is a partial perspective view showing a state in which the module frame and the end plate are removed in the battery module of FIG. 3.
FIG. 5 is a diagram showing a state in which a busbar assembly according to an embodiment of the present disclosure is connected to a battery module.
FIG. 6 is a perspective view showing a cover included in the busbar assembly of FIG. 5.
FIG. 7 is a plan view of the busbar assembly of FIG. 5 as viewed from above.
FIG. 8 is a bottom view of the busbar assembly of FIG. 5 as viewed from below.
FIGS. 9 (a) and (b) are diagrams showing cross sections cut along the cutting line A-A' and the cutting line B-B' of FIG. 8, respectively.
FIGS. 10 (a) and (b) are a plan view and a side view showing a fire resistant silicone member according to an embodiment of the present disclosure.
FIG. 11 is a bottom view of a busbar assembly according to a modified embodiment of the present disclosure.
FIG. 12 is a diagram showing a cross section cut along the cutting line C-C' of FIG. 11.
FIG. 13 is a perspective view showing a cover and a glass fiber tape according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of portions that are not related to the description will be omitted for clarity, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when it is referred to as "cross-sectional", it means when a target portion is viewed from the side of a cross section cut vertically.

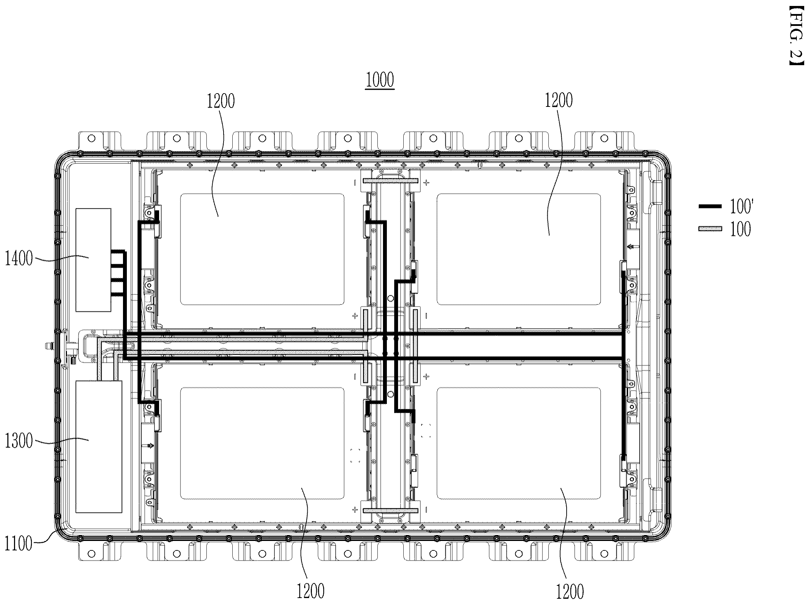

FIG. 2 is a plan view showing a battery pack according to an embodiment of the present disclosure.

Referring to FIG. 2, a battery pack 1000 according to an embodiment of the present disclosure includes: a busbar assembly 100; battery modules 1200; a BDU (Battery Disconnect Unit) module 1300 for controlling an electrical connection of the battery modules 1200; and a BMS (Battery Management System) module 1400 for monitoring and controlling an operation of the battery modules 1200. At least one busbar assembly 100 according to this embodiment electrically connects at least one of: between the battery modules 1200, between the battery module 1200 and the BDU module 1300, between the battery module 1200 and the BMS module 1400, or between the BDU module 1300 and the BMS module 1400. Specifically, a plurality of battery modules 1200 can be housed in the pack frame 1100, and an electrical connection between the battery modules 1200 or an electrical connection between the battery modules 1200 and the BDU module 1300 can be achieved by the busbar assembly 100. That is, the busbar assembly 100 according to this embodiment can be in charge of an HV (High voltage) connection. Here, the HV connection is a connection that serves as a power source for supplying power that requires high voltage, and means a connection between battery cells or a connection between battery modules.

The BDU module 1300 is a member for controlling an electrical connection of the battery modules 1200, and can interrupt the power between the power conversion device and the battery module 1200. When a condition occurs in which the current exceeds a set range, the BDU module 1300 can interrupt the power of the battery pack 1000, thereby ensuring the safety of the battery pack 1000.

Meanwhile, the LV connection member 100' according to the present embodiment can be in charge of an electrical connection between the battery module 1200 and the BMS module 1400. The electrical connection herein is an LV (Low voltage) connection, which means a sensing connection for detecting and controlling the voltage and temperature of the battery module 1200. Specifically, sensors and the like are arranged inside the battery module 1200, and real-time temperature information or voltage information of the battery module 1200 is transmitted to the BMS module 1400 via the LV connection member 100'. It is possible to monitor and control the real-time operating status of the battery module 1200 via the BMS module 1400. Although not specifically shown in the figure, an HV current sensor may be integrated into the BMS module 1400. In this case, the busbar assembly according to the present embodiment may be in charge of an electrical connection between the battery module 1200 and the BMS module 1400 or between the BDU module 1300 and the BMS module 1400.

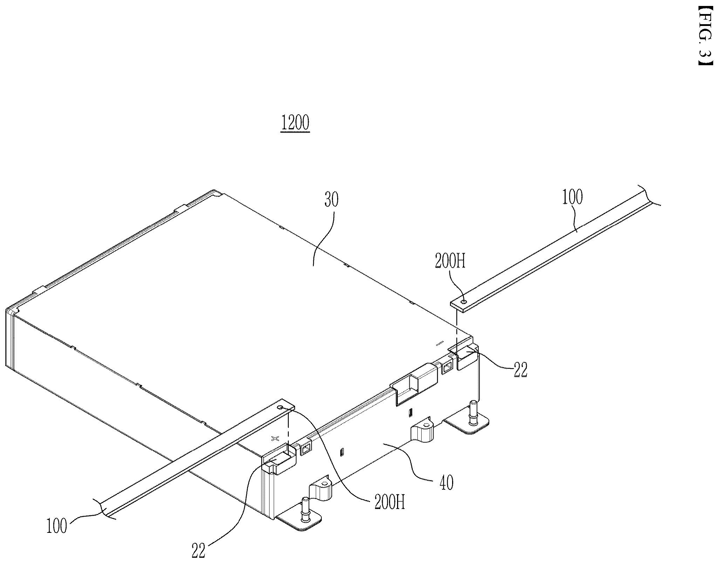

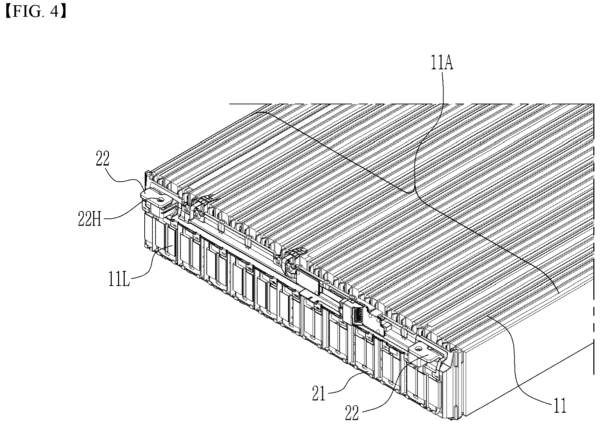

Next, a battery module 1200 according to the present embodiment will be described with reference to FIGS. 3 and 4. However, the battery module 1200 described below is an exemplary structure of a battery module including a plurality of battery cells 11, and various types of battery modules including a plurality of battery cells may be applied.

FIG. 3 is a perspective view showing one of the battery modules included in the battery pack of FIG. 2. FIG. 4 is a partial perspective view showing a state in which the module frame and the end plate are removed in the battery module of FIG. 3.

Referring to FIGS. 3 and 4, the battery module 1200 according to the present embodiment may include a battery cell stack 11A in which a plurality of battery cells 11 are stacked. The battery cell stack 11A is illustrated in FIG. 4. This battery cell stack 11A may be housed in an internal space formed by the module frame 30 and the end plate 40.

The battery cell according to the present embodiment may be a pouch-type battery cell, a prismatic battery cell, or a cylindrical battery cell. However, in FIGS. 3 and 4, a case where the battery cell 11 is a pouch-type battery cell is described as an example of the present disclosure. The pouch-type battery cell may be formed by housing an electrode assembly in a pouch case made of a laminate sheet including a resin layer and a metal layer, and then fusing the outer peripheral part of the pouch case. Such battery cells 11 may be formed in a rectangular sheet structure. The electrode lead 11L connected to the electrode assembly protrudes to an outside of the pouch case, wherein the electrode leads 11L of each battery cell 11 may be electrically connected to each other via the lead busbar 21. On the other hand, at least one electrode lead 11L may be connected to the terminal busbar 22. A portion of the terminal busbar 22 may be exposed to the outside of the battery module 1200 as shown in FIG. 3. Both the lead busbar 21 and the terminal busbar 22 may include a metal material with excellent electrical conductivity.

The busbar assembly 100 according to the present embodiment is electrically connected to such a terminal busbar 22, so that the above-mentioned HV connection can be achieved. That is, the battery module 1200 may be electrically connected to the other battery module 1200, BDU module 1300, or BMS module 1400 via the busbar assembly 100 connected to the terminal busbar 22.

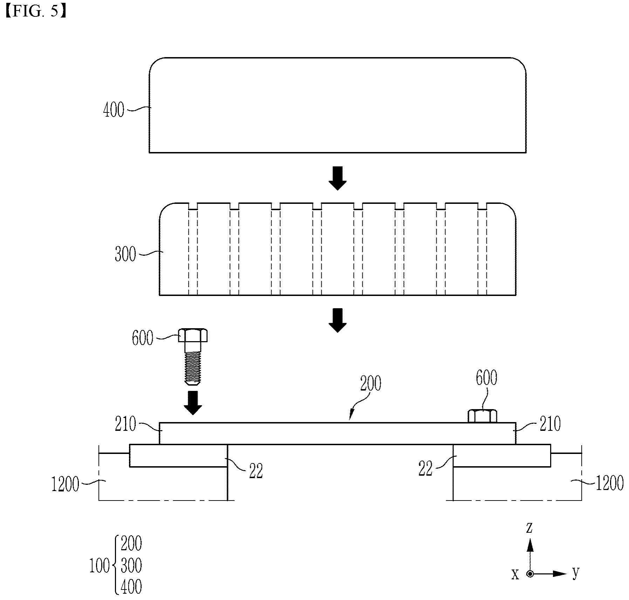

Next, a busbar assembly according to an embodiment of the present disclosure will be described in detail with reference to FIGS. 5 to 10.

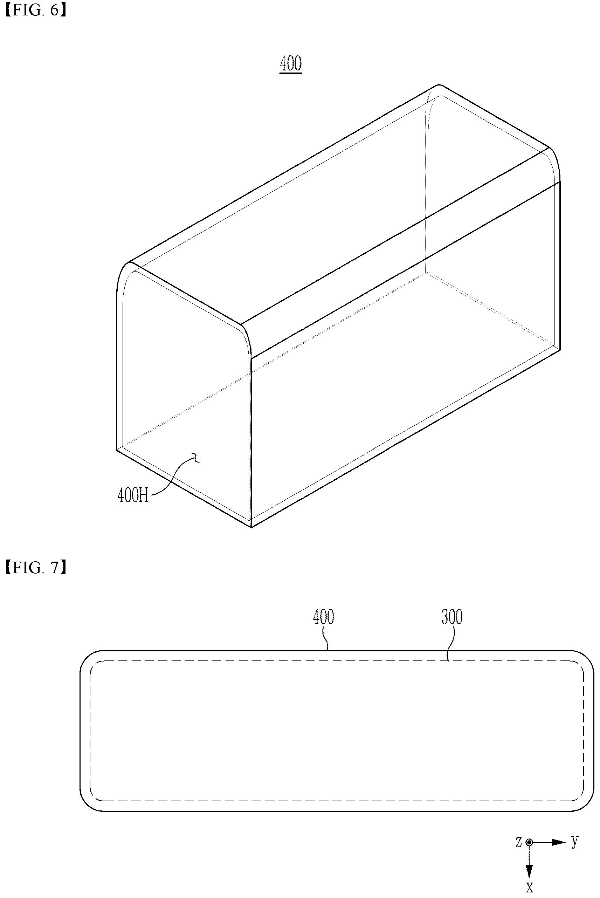

FIG. 5 is a diagram showing a state in which a busbar assembly according to an embodiment of the present disclosure is connected to a battery module. FIG. 6 is a perspective view showing a cover included in the busbar assembly of FIG. 5.

Referring to FIGS. 5 and 6, a busbar assembly 100 according to an embodiment of the present disclosure includes: a busbar 200 that guides an electrical connection of a battery module 1200 inside a battery pack 1000; a fire resistant silicone member 300 in which a recessed part is formed on a lower surface; and a cover 400 in which an opening part is formed on a lower part.

The bus bar 200 is configured to guide an electrical connection of the battery modules, i.e., an HV connection, and may include a metal material having excellent electrical conductivity. As an example, the busbar 200 may include a copper (Cu) material. The busbar 200 may be a metal bar that extends along the length direction.

The fire resistant silicone member 300 is fitted into the inside of the cover 400 through the opening part 400H formed in the cover 400. As shown in FIG. 6, the cover 400 may have a shape in which it has an empty space inside and this empty space is connected to the opening part 400H formed at the lower part. That is, the cover 400 may include an upper surface part and four side surface parts, and the internal space formed by the upper surface part and the four side surface parts may be in communication with the opening part 400H formed at the lower part.

The cover 400 may include a MICA material. The cover 400 including the MICA material may impart fire resistance and structural rigidity to the busbar assembly 100. Even if a flame occurs due to thermal runaway in the battery pack 1000, the cover 400 may not melt but protect the busbar 200 inside from the surrounding structures, thereby preventing the occurrence of an additional short circuit.

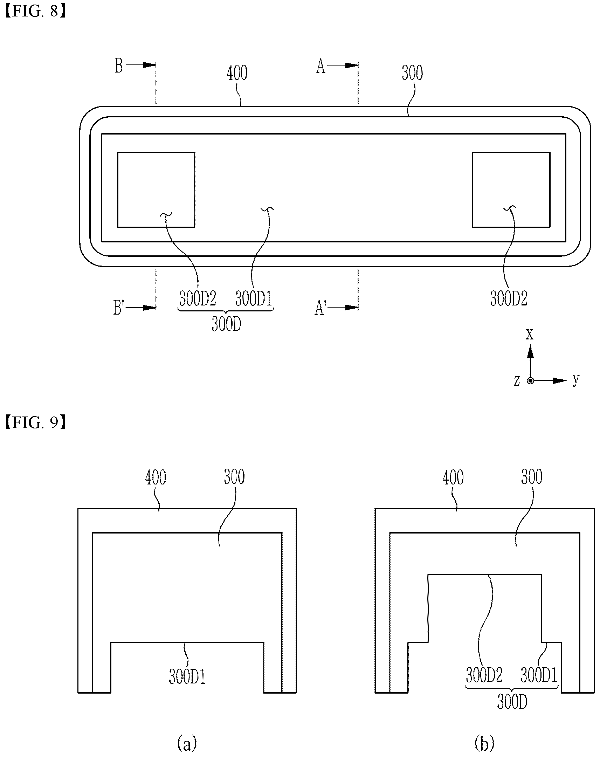

FIG. 7 is a plan view of the busbar assembly of FIG. 5 as viewed from above. FIG. 8 is a bottom view of the busbar assembly of FIG. 5 as viewed from below. FIGS. 9 (a) and (b) are diagrams showing cross sections cut along the cutting line A-A' and the cutting line B-B' of FIG. 8, respectively. Considering the angle in FIG. 7, the fire resistant silicone member 300 fitted into the cover 400 cannot be seen, but for the convenience of explanation, the fire resistant silicone member 300 is expressed in a dotted line.

Referring to FIGS. 5, 7, 8 and 9, a recessed part 300D is formed on the lower surface of the fire resistant silicone member 300 according to the present embodiment, and a busbar 200 is mounted on this recessed part 300D. That is, in a state where the busbar 200 is mounted on the recessed part 300D formed on the lower surface of the fire resistant silicone member 300, the busbar 200 and the fire resistant silicone member 300 are fitted into the inside of the cover 400 through the opening part 400H of the cover 400.

The fire resistant silicone member 300 may include a fire resistant silicone material. The fire resistant silicone member 300 containing a fire resistant silicone material and thus having electrical insulation properties functions as an insulating layer that protects the busbar 200, thereby preventing the busbar 200 from coming into contact with other electrical components or conductive materials to cause a short circuit.

The fire resistant silicone material is a material that is ceramifying when exposed at flame or high heat, unlike common silicone materials that are exposed to flame or burn at high temperatures. The fire resistant silicone material may include silicone polymer and silica. The applied silicone polymer may be a polysiloxane-based compound having a vinyl group as a functional group, and corresponds to a base material for a fire resistant silicone material. The silica may be a fumed silica, which is a reinforcing filler included in the silicone polymer. A high-purity silicone chloride (SiCl₄) compound can be produced using metallic silicone as a main raw material through reaction with hydrochloric acid and purification process, and this can be reacted with hydrogen and oxygen in a high temperature flame to obtain fumed silica. Further, the fire resistant silicone may contain platinum Pt as a catalyst.

When the fire resistant silicone material is exposed to flame or high heat, silica (SiO₂) is crosslinked together with decomposition of the silicone polymer to form a ceramic material. The fire resistant silicone member 300 according to the present embodiment does not burn or melt out, but can be ceramified to maintain electrical insulation properties even if exposed to flame or placed in a high-temperature environment.

The busbar 200 guides an electrical connection within the battery pack 1000. In FIG. 5, as an example, the busbar 200 electrically connects a gap between the terminal busbars 22 of the battery module 1200. Each of both ends of the busbar 200 can be connected to the terminal busbar 22 of the battery module 1200.

While the fire resistant silicone member 300 is coupled from top to bottom toward such a busbar 200, the busbar 200 can be mounted in the recessed part 300D of the fire resistant silicone member 300. Furthermore, while the cover 400 is coupled from top to bottom, the busbar 200 and the fire resistant silicone member 300 can be located in the internal space of the cover 400. Thereby, even if a flame occurs due to thermal runaway in the battery pack 1000, the cover 400 protects the busbar 200 and the fire resistant silicone member 300. In addition, the fire resistant silicone member 300 can be ceramified to maintain electrical insulation properties rather than being burned or melted away. Ultimately, the electrical insulation properties of the busbar assembly 100 is maintained, and the occurrence of an additional short circuit from the busbar assembly 100 is prevented, thereby preventing the flame from leading to an explosion of the battery pack or the vehicle equipped with the battery pack.

In addition, when the cover 400 includes a MICA material, the structural rigidity is improved, while there is a risk of cracking or breaking due to external vibrations or impacts. The fire resistant silicone member 300 according to the present embodiment can absorb external vibrations or impacts while being located on the inside of the cover 400. That is, due to the elastic properties of the fire resistant silicone member 300, external vibrations or impacts are not directly transmitted to the cover 400. Thereby, the risk of the cover 400 being broken or cracked can be reduced.

Meanwhile, in the case of the conventional covering member 20P shown in FIG. 1, since the cap 20C fixed by the tape 20T covers the portion where the busbar 20 and the terminal busbar 22 are connected, there is a concern that the busbar 20 and the terminal busbar 22 are exposed in the lateral direction. On the other hand, in the case of the present disclosure, since the fire resistant silicone member 300 and the cover 400 are assembled from top to bottom toward the busbar 200, the portion where the busbars 200 as well as the busbar 200 and the terminal busbar 22 are connected can be completely covered. Thereby, there is no concern that dust particles or the like accumulate on the busbar 200 or the terminal busbar 22 of the battery module 1200, and the risk of occurrence of a short circuit inside the battery pack 1000 can be reduced.

The recessed part 300D of the fire resistant silicone member 300 according to the present embodiment may include a first recessed part 300D1 configured to be recessed corresponding to the shape of the busbar. Specifically, the first recessed part 300D1 according to the present embodiment may be configured to be recessed upward from the lower surface of the fire resistant silicone member 300. While the busbar 200 is inserted into the first recessed part 300D1, the busbar 200 may be fixed within the fire resistant silicone member 300. In order to effectively fix the busbar 200, it is preferable that the first recessed part 300D1 corresponding to the shape of the busbar 200 has a width in the x-axis direction by the width of the busbar 200, has a width in the y-axis direction by the length of the busbar 200, and has a depth in the z-axis direction by the thickness of the busbar 200.

Meanwhile, the busbar 200 may have at least two connection regions 210, which are portions in contact with the terminal busbars 22 of the battery module 1200. Any one connection region 210 of the busbar 200 may be connected while being in contact with the terminal busbar 22 of any one battery module 1200, and another connection region 210 of the busbar 200 may be connected while being in contact with the terminal busbar 22 of another battery module 1200. Thereby, the busbar 200 may electrically connect the terminal busbars 22 of the battery modules 1200 to each other. The connection method between the busbar 200 and the terminal busbar 22 is not particularly limited as long as physical and electrical connection is possible. As an example, the connection region 210 of the busbar 200 can be connected to the terminal busbar 22 of the battery module 1200 by a bolt connection. Specifically, the busbar 200 and the terminal busbar 22 can be physically and electrically connected in such a way that the bolt member 600 penetrates through both the hole 200H (see FIG. 3) of the busbar 200 and the hole of the terminal busbar 22 and is coupled with a nut (not shown).

At this time, the recessed part 300D according to the present embodiment may include a second recessed part 300D2 configured to be more recessed than the first recessed part 300D1 in a portion corresponding to the connection region 210. That is, the portion of the fire resistant silicone member 300 corresponding to the connection region 210 may be more recessed upward than the first recessed part 300D1 to provide the second recessed part 300D2. The bolt member 600 that connects the busbar 200 and the terminal busbar 22 may be located in the space formed by the second recessed part 300D2. When the busbar 200 and the terminal busbar 22 are protected by the fire resistant silicone member 300 and the cover 400, the bolt member 600 may also be protected within the second recessed part 300D2.

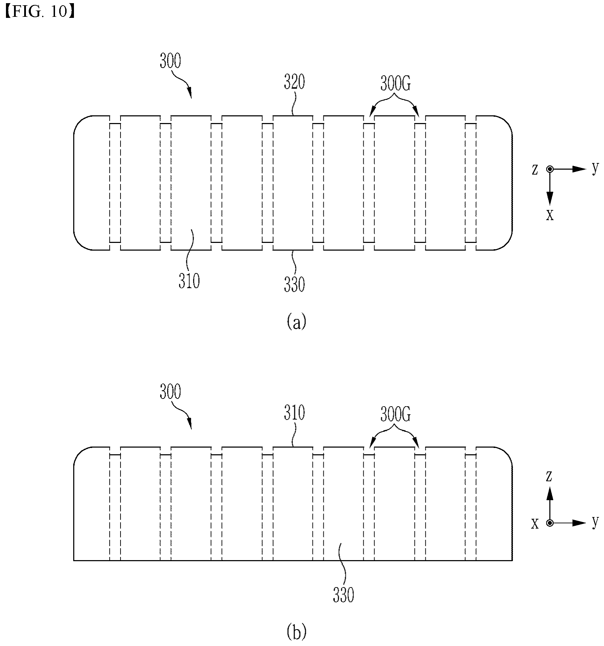

FIGS. 10 (a) and (b) are a plan view and a side view showing a fire resistant silicone member according to an embodiment of the present disclosure. FIG. 10 (a) is a diagram of a fire resistant silicone member 300 according to an embodiment of the present disclosure as viewed from above, and FIG. 10 (b) is a diagram of a fire resistant silicone member 300 according to an embodiment of the present disclosure as viewed from the side.

Referring to FIG. 5 and FIGS. 10 (a) and (b), the fire resistant silicone member 300 according to the present embodiment may be formed with a plurality of grooves 300G on the outer surface facing the inner surface of the cover 400. The grooves 300G may be formed in a shape that extends along a certain direction. As an example, the plurality of grooves 300G may extend along one side surface part 320, the upper surface part 310, and the other side surface part 330 of the fire resistant silicone member 300. For example, as illustrated, a grooved form on the outer surface of the fire resistant silicone member 300 may extend along one side surface part 320, the upper surface part 310, and the other side surface part 330 of the fire resistant silicone member 300, so that each groove 300G may be formed, wherein such grooves 300G may be arranged apart from each other along the y-axis direction.

The outer surface of the fire resistant silicone member 300 is formed with a plurality of grooves 300G, which provides a space for the fire resistant silicone member 300 to expand when the busbar assembly 100 is exposed to flame or high temperature. Furthermore, when the busbar assembly 100 is exposed to flame or high temperature, gas may be generated from the fire resistant silicone member 300, and such gas may be discharged to the outside of the busbar assembly 100 along the plurality of grooves 300G. In this way, a space in which the fire resistant silicone member 300 expands exists and the gas generated from the fire resistant silicone member 300 is easily discharged, whereby even in a flame and high temperature environment, the force and stress applied to the cover 400 are reduced, and the shape of the refractory silicon member 300 and the cover 400 can be easily maintained.

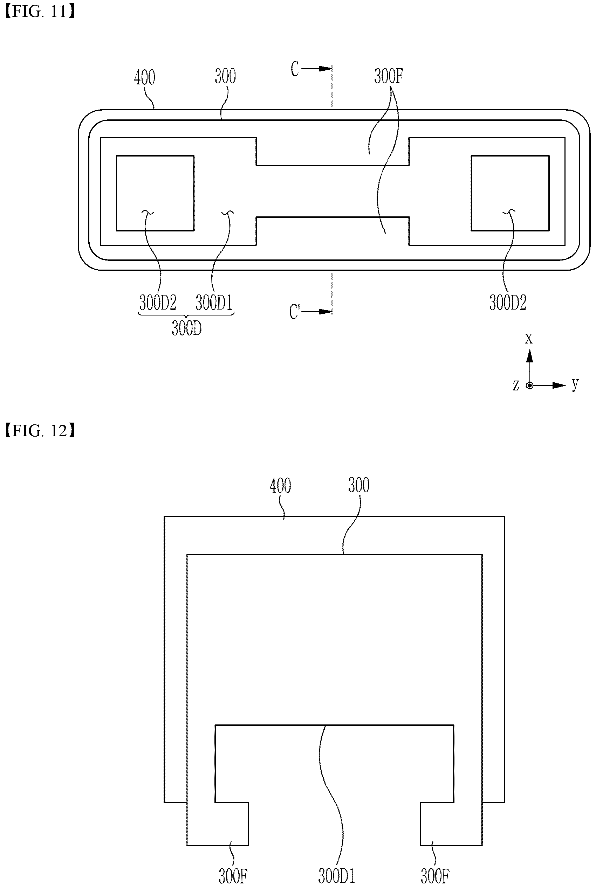

FIG. 11 is a bottom view of a busbar assembly according to a modified embodiment of the present disclosure. FIG. 12 is a diagram showing a cross section cut along the cutting line C-C' of FIG. 11.

Referring to FIGS. 11 and 12, a busbar assembly 100 according to a modified embodiment of the present disclosure includes a fire resistant silicone member 300 and a cover 400, and a recessed part 300D having a first recessed part 300D1 may be formed in the fire resistant silicone member 300. In addition, the recessed part 300D may include a second recessed part 300D2. The structure of the fire resistant silicone member is similar to that of the embodiments previously described up to here, but the fire resistant silicone member 300 according to a modified embodiment of the present disclosure may include a fixed guide part 300F that supports a part of the lower surface of the busbar. A fixed guide part 300F configured to protrude in a mutually located direction may be provided at both corner portions of the fire resistant silicone member 300.

While the fire resistant silicone member 300 is coupled from top to bottom toward the busbar 200, the fixed guide part 300F can be naturally folded and unfolded again, and arranged on the lower surface of the busbar 200 to support a part of the lower surface of the busbar 200. Thereby, the busbar 200 can be more firmly fixed within the fire resistant silicone member 300. In addition, the fixed guide part 300F can prevent the fire resistant silicone member 300 from being separated from the busbar 200 even when subjected to external vibrations or impacts.

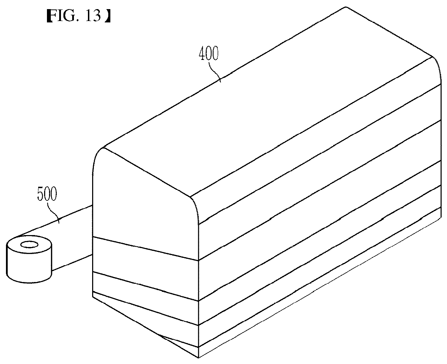

FIG. 13 is a perspective view showing a cover and a glass fiber tape according to an embodiment of the present disclosure.

Referring to FIG. 13, the busbar assembly according to the present embodiment may further include a glass fiber tape 500 that wraps around the outer surface of the cover 400.

The glass fiber tape 500 may include a substrate layer including glass fibers and an adhesive layer formed on one surface of the substrate layer. The substrate layer may be a fabric body including glass fibers, and the adhesive layer may include at least one of an acrylic resin or a silicone resin. The glass fiber tape 500 may be a rectangular tape having a long side and a short side.

In FIG. 13, the glass fiber tape 500 is illustrated as wrapping only a part of the outer surface of the cover 400, but this is for convenience of explanation, and the cover 400 may not be directly exposed if the glass fiber tape 500 wraps around the entire outer surface of the cover 400.

This glass fiber tape 500 may play the role of a primary fire resistant wall. That is, the glass fiber tape 500 directly protects the fire resistant silicone member 300 and the cover 400 from flames, thereby improving the fire resistance of the busbar assembly. In addition, since the outer surface of the cover 400 is taped with the glass fiber tape 500, the structural rigidity may be increased.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery module or the battery pack can be applied to various devices. Specifically, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: busbar assembly
200: busbar
300: fire resistant silicone member
300G: groove
400: cover
500: glass fiber tape
600: bolt member
1000: battery pack
1100: pack frame
1200: battery module
1300: BDU module
1400: BMS module

## Claims

1. A busbar assembly comprising:
a busbar that guides an electrical connection of a battery module inside a battery pack;
a fire resistant silicone member in which a recessed part is formed on a lower surface; and
a cover in which an opening part is formed on a lower part,
wherein the fire resistant silicone member is fitted into the inside of the cover through the opening part, and
wherein the busbar is mounted in the recessed part of the fire resistant silicone member.

2. The busbar assembly according to claim 1, wherein:
the recessed part comprises a first recessed part configured to be recessed corresponding to the shape of the busbar.

3. The busbar assembly according to claim 1, wherein:
the busbar has at least two connection regions that are portions in contact with the terminal busbar of the battery module.

4. The busbar assembly according to claim 3, wherein:
the recessed part comprises a first recessed part configured to be recessed corresponding to the shape of the busbar; and a second recessed part configured to be more recessed than the first recessed part in a portion corresponding to the connection area.

5. The busbar assembly according to claim 3, wherein:
the connection region of the busbar is connected to the terminal busbar of the battery module by a bolt connection.

6. The busbar assembly according to claim 1, wherein:
a plurality of grooves are formed on an outer surface facing the inner surface of the cover among the fire resistant silicone members.

7. The busbar assembly according to claim 6, wherein:
the plurality of grooves extend along one side surface part, the upper surface part, and the other side surface part of the fire resistant silicone member.

8. The busbar assembly according to claim 1, wherein:
the fire resistant silicone member comprises a fixed guide part that supports a part of the lower surface of the busbar.

9. The busbar assembly according to claim 1,
further comprising a glass fiber tape that wraps around an outer surface of the cover.

10. The busbar assembly according to claim 1, wherein:
the fire resistant silicone member comprises a silicone material that is ceramified at high temperature.

11. The busbar assembly according to claim 1, wherein:
the cover comprises a MICA material.

12. A battery pack comprising:
at least one busbar assembly according to claim 1;
the battery modules;
a BDU (Battery Disconnect Unit) module for controlling the electrical connection of the battery modules; and
a BMS (Battery Management System) module for monitoring and controlling the operation of the battery modules,
wherein the at least one busbar assembly electrically connects at least one of: between the battery modules, between the battery module and the BDU module, between the battery module and the BMS module, or between the BDU module and the BMS module.
